# EUROPÄISCHE PATENTSCHRIFT

(11) **EP 1 901 366 B1**
(45) Veröffentlichungstag und Bekanntmachung des Hinweises auf die Patenterteilung: **09.11.2011**
(21) Anmeldenummer: 07016097.3
(22) Anmeldetag: 16.08.2007
(51) Int. Cl.: H01M 2/10

(54) **Elektrische Speicherbatterie**
Electric storage battery
Batterie de rechange électrique

(30) Priorität: 01.09.2006 DE 102006041326
(43) Veröffentlichungstag der Anmeldung: 19.03.2008
(73) Patentinhaber: Johnson Controls Hybrid and Recycling GmbH, 30419 Hannover (DE)
(72) Erfinder: Bechthold, Dieter, 61118 Bad Vibel (DE); Pelz, Kai, 31832 Springe (DE); Joswig, Ralf, 29690 Buchholz (Aller) (DE); Wiegmann, Martin, 27246 Borstel (DE)
(74) Vertreter: Gerstein, Hans Joachim

(56) Entgegenhaltungen:
- DE-C- 930 731
- JP-A- 2001 268 717
- US-A- 2 939 901
- US-A- 3 056 850
- US-A1- 2001 010 878
- US-A1- 2005 260 488

## Beschreibung

Die Erfindung betrifft eine elektrische Speicherbatterie mit einem Gehäuse und einer Mehrzahl von elektrisch miteinander verschalteten, rechteckigen Zellenverbundmodulen.

Elektrische Speicherbatterien sind insbesondere für den Einsatz in Fahrzeugen hinreichend bekannt. Starterbatterien werden zumeist in Form von Bleiakkumulatoren realisiert, bei denen eine Vielzahl von Elektrolytplatten in einem Kunststoffgehäuse aufgenommen werden, das mit Elektrolyt gefüllt ist.

Weiterhin ist der Einsatz von elektrischen Speicherbatterien als Antriebsbatterie in Fahrzeugen bekannt. Hierbei kommen insbesondere Nickel-Metallhydrid, Nickel-Kadmium oder Lithium-Zellen zum Einsatz.

Bei diesen Speicherbatterien haben Rundzellen übereinander liegende aufgewickelte Elektrodenplatten. Die quaderförmigen Zellen haben eine Vielzahl von durch Separatoren getrennt voneinander übereinander gestapelte, rechteckförmige Elektrodenplatten. Diese Rundzellen oder quaderförmigen Zellen können ihrerseits wieder zu Zellenverbundmodulen zusammengefasst sein.

Eine zur Versorgung eines Fahrzeugs insbesondere als Antriebsbatterie geeignete elektrische Speicherbatterie weist eine Vielzahl derartige Zellen oder Zellenverbundmodule auf, die in einem gemeinsamen Gehäuse angeordnet sind. Die Anordnung und Montage der Zellenverbundmodule in dem Gehäuse wird dabei insbesondere im Hinblick auf das thermische Verhalten im Gehäuse optimiert.

DE 100 64 648 A1 offenbart eine elektrische Speicherbatterie mit einem Gehäuse und einer Mehrzahl von elektrisch miteinander verschalteten Rundzellen. Mehrere Rundzellen werden mit Hilfe von Verbindungsstücken hintereinander zu einem zylinderförmigen Zellenverbundmodul verschaltet. Die Zellenverbundmodule werden dann durch kreisförmige Öffnungen in einem scheibenförmigen Träger so gehalten, dass diese entlang eines Radius nebeneinander angeordnet sind und in der Mitte einen Hohlraum zur Kühlung frei lassen. Diese entstehende rohrförmige Anordnung von Zellenverbundmodulen wird durch Kontaktplatten an beiden Enden elektrisch kontaktiert und mechanisch fixiert. Die gesamte Anordnung wird fest in einem Gehäuse verschraubt.

AT 27 667 E offenbart einen Bleiakkumulator, bei dem die Verbinderstreifen von Elektroden mit einem stoßdämpfenden Element am Boden des Zellgefäßes gelagert sind. Damit wird die Stoßempfindlichkeit von Bleiakkumulatoren reduziert.

Die DE 930731 offenbart die Befestigung einer elektrischen Batterie auf Kraftfahrzeugen mittels einer schwimmenden Lagerung der Batterie in einem Rahmen, um die Batterie vor Erschütterungen zu schützen.

Die JP2001 26 8717 offenbart einen Batteriepack mit einer Vielzahl von Zellen, welche mittels elastischer Gummistreifen auf einem Unterteil des Gehäuses befestigt werden, um so die Zellen gegen Vibration zu schützen.

US 7,014,949 B2 offenbart ein Batteriepack mit einer Mehrzahl von zylindrischen Litium-Ionen-Akkumulatorzellen, die in ein rechteckförmiges Gehäuse aufgenommen sind. Das Gehäuse wird an den acht Ecken, den schmalen Seitenkanten oder der Ober- und Unterseite mit vibrationsdämpfenden Materialien belegt.

JP 2003 25 7391 A offenbart einen Batteriepack mit einer Vielzahl von Zellen, die mit vibrationsdämpfenden Mitteln, wie beispielsweise Federn, im Batteriepack gelagert werden. Insbesondere in Fahrzeuganwendungen müssen die Einzelzellen und Zellenverbundmodule elektrochemischer Speicherbatterien den Umgebungsbedingungen über die Fahrzeuglebensdauer Stand halten. Die Speicherbatterien müssen dabei unter anderem die durch das Fahrzeug übertragenen Vibrationen, Schwingungen, Stöße und Schläge ohne Beschädigung aufnehmen können. Gleichzeitig müssen auftretende Kräfte und geometrische Änderungen, wie sie z.B. durch den Innendruck der Zellen oder Zellenverbundmodule oder durch temperaturabhängige geometrische Veränderungen vorkommen können, zugelassen und sicher beherrschbar sein. Auch Fertigungstoleranzen, d.h. maßliche Unterschiede der Bauteile zueinander, müssen beim Zusammenbau derart beherrschbar sein, so dass eine sichere Aufnahme und Befestigung der einzelnen Komponenten ermöglicht werden kann.

Aufgabe der vorliegenden Erfindung ist es daher, eine verbesserte elektrische Speicherbatterie zu schaffen, bei der eine beliebige Anzahl von Zellenverbundmodulen in einem Batterieverband derart befestigt werden, dass die Speicherbatterie Vibrationen, Schwingungen, Stößen, Schlägen etc. sicher Stand hält und Fertigungstoleranzen ausgeglichen werden.

Die Aufgabe wird mit der elektrischen Speicherbatterie gemäß Anspruch 1 gelöst.

Mit Hilfe der Feder-Dämpfungs-Elemente wird erreicht, dass von außen eingetragene Vibrationen, Schwingungen, Stöße, Schläge etc. gedämpft und damit weitestgehend absorbiert werden. Durch, die Feder-Dämpfungs-Elemente können zudem Abweichungen maßlicher Art sowie Abweichungen von Form und Lage der zu verbauenden Komponenten durch eine Kraftbeaufschlagung mittels der Feder-Dämpfungs-Elemente ausgeglichen werden. Das Feder-Dämpfungs-Element bewirkt somit eine Befestigung der Zellenverbundmodule in dem Gehäuse nach dem Prinzip eines Los- und Festlagers.

Mit diesem gemeinsamen Feder-Dämpfungs-Element wird eine gemeinsame Lagerung der aufgereihten Zellenverbundmodule erreicht.

Vorzugsweise sind zwei Feder-Dämpfungs-Elemente im äußeren Bereich der Unterkanten der Zellenverbundelemente angeordnet, so dass die Zellenverbundmodule an ihrer Unterkante mit den Feder-Dämpfungs-Elementen auf dem Gehäuse gelagert sind.

Vorteilhaft ist es auch, wenn an beiden Seitenkanten der Zellenverbundmodule jeweils ein Feder-Dampfungs-Element angeordnet ist. Damit werden die Zellenverbundmodule auch seitlich im Gehäuse durch Los-/Festlageranordnung getragen.

Gemäß der Erfindung ist jeweils eine im Profil L-förmige Befestigungsschiene angrenzend an die Übergänge der Unterkante zur Seitenkante der Zellenverbundmodule angeordnet. Die L-förmige Befestigungsschiene hat zwei Schenkel, wobei die beiden Schenkel an zugeordneten Seitenkanten der Schenkel senkrecht aufeinander stehen. Die Befestigungsschienen erstrecken sich dann quer zur Richtung der längsten Seite der rechteckförmigen Zellenverbundmodule entlang der Mehrzahl der Zellenverbundmodule, so dass die aneinander gereihten rechteckigen Zellenverbundmodule mit jeweils einem Schenkel an der Unterseite und mit dem anderen Schenkel an einer Seite befestigt wird. Die mindestens eine als Loslager vorgesehene Befestigungsschiene kann Nuten zur Aufnahme eines separaten Feder-Dämpfungs-Elementes haben, das in die Nut einer Befestigungsschiene eingelegt wird. Denkbar ist aber auch, dass die als Loslager wirkende Befestigungsschiene selbst aus einem federnden und dämpfenden Material besteht und selbst als Feder-Dämpfungs-Element wirkt. Es ist auch denkbar, dass die als Loslager wirkende Befestigungsschiene über ein Federpaket mit dem Gehäuse verschraubt ist.

Die Zellenverbundmodule können weiterhin über Festlager mit dem Gehäuse verbunden sein. Hierzu kann die Befestigungsschiene beispielsweise einen Vorsprung haben, die eine Nut der von der Befestigungsschiene aufzunehmenden Zellenverbundmodule zur Festlagerung mittels Nut-Feder-Verbindung eingreift.

An den äußeren Seitenwänden eines Blocks von aneinander gereihten Zellenverbundmodulen kann zudem angrenzend an die benachbarte Seitenwand des Gehäuses sowie angrenzend an die entsprechende Seitenwand der äußeren Zellenverbundmodule ein zusätzliches Feder-Dämpfungs-Element vorgesehen sein, um Vibrationen, Stöße, Fertigungstoleranzen etc. an der Seitenwand des Gehäuses auszugleichen.

Die Feder-Dämpfungs-Elemente sind vorzugsweise aus einem hochelastischen Elastomermaterial gebildet, d.h. aus einer technischen Feder, die beispielsweise in Streifen so in die Befestigungsschiene eingelegt wird, so dass eine Einspannung der Zellenverbundmodule in verschiedene Achsrichtungen ermöglicht wird.

Die Erfindung wird nachfolgend anhand eines Ausführungsbeispiels mit den beigefügten Zeichnungen näher erläutert. Es zeigen:
- Figur 1 -: perspektivische Ansicht einer elektrischen Speicherbatterie mit einer Vielzahl von in Befestigungsschienen getragenen Zellenverbundmodulen;
- Figur 2 -: Seitenansicht eines Zellenverbundmoduls mit Nuten und Befestigungsschienen an den unteren Ecken;
- Figur 3 -: Ansicht auf die Schmalseite eines Zellenverbundmoduls mit quer verlaufender Nut;
- Figur 4 -: Seitenansicht der elektrischen Speicherbatterie aus Figur 1;
- Figur 5 -: Ausschnitt der Seitenansicht aus Figur 4 mit Feder-Dämpfungs-Element zwischen Seitenwand des Gehäuses und Seitenwand des äußeren Zellenverbundmoduls;
- Figur 6 -: Draufsicht auf die elektrische Speicherbatterie;
- Figur 7 -: Seitenansicht eines Zellenverbundmoduls mit quer verlaufender Nut und einer weiteren Ausführungsform von Befestigungsschienen zur Los- und Festlagerung;
- Figur 8 -: perspektivische Ansicht einer elektrischen Speicherbatterie mit einer Vielzahl von in Befestigungsschienen getragenen Zellenverbundmodulen;
- Figur 9 -: Seitenansicht eines Zellenverbundmoduls mit quer verlaufender Nut und einer weiteren Ausführungsform von Befestigungsschienen zur Los- und Festlagerung;
- Figur 10 -: Ausschnittsansicht eines Querschnitts der Festlager-Befestigungs-schiene.

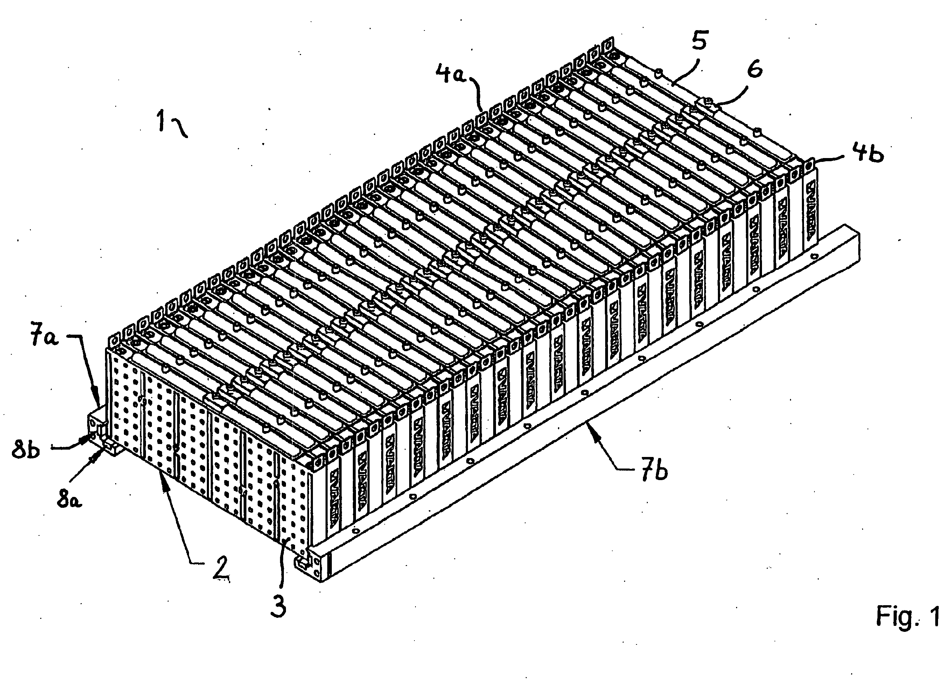

Die Figur 1 lässt eine elektrische Speicherbatterie 1 mit einer Vielzahl von rechteckförmigen, an den Seitenwänden aneinander gereihten Zellenverbundmodulen 2 erkennen. Die Zellenverbundmodule 2 haben eine Vielzahl von rechteckförmigen Elektroden, die getrennt durch Separatoren aufeinander gestapelt sind und sich beim Außengehäuse 3 des Zellenverbundmoduls untergebracht sind. Erkennbar sind auch die positiven und negativen Anschlusspole 4a, 4b sowie die Gasableitkanäle 5 mit Überdruckventilen 6.

Die Zellenverbundmodule 2 werden mit einer ersten und zweiten Befestigungsschiene 7a, 7b nach dem Prinzip eines Los- und Festlagers an den unteren Seitenkanten gehalten. Hierbei sind streifenförmige Feder-Dämpfungs-Elemente 8a, 8b in Nuten der Befestigungsschienen 7a, 7b eingelegt, auf denen die Zellenverbundmodule 2 aufgelagert sind.

Die Befestigungsschienen 7a, 7b sind im Profil L-förmig und haben jeweils zwei Schenkel, die an zugeordneten Seitenkanten senkrecht aufeinander stehen. Die unteren Schenkel der Befestigungsschienen 7a, 7b grenzen an die Unterkante der Zellenverbundmodule 2 an, während die seitlichen Schenkel benachbart zu den Seitenkanten der Zellenverbundmodule 2 sind.

Die Befestigungsschienen 7a, 7b sind fest mit einem nicht dargestellten Gehäuse verschraubt, das die elektrische Speicherbatterie 1 umgibt.

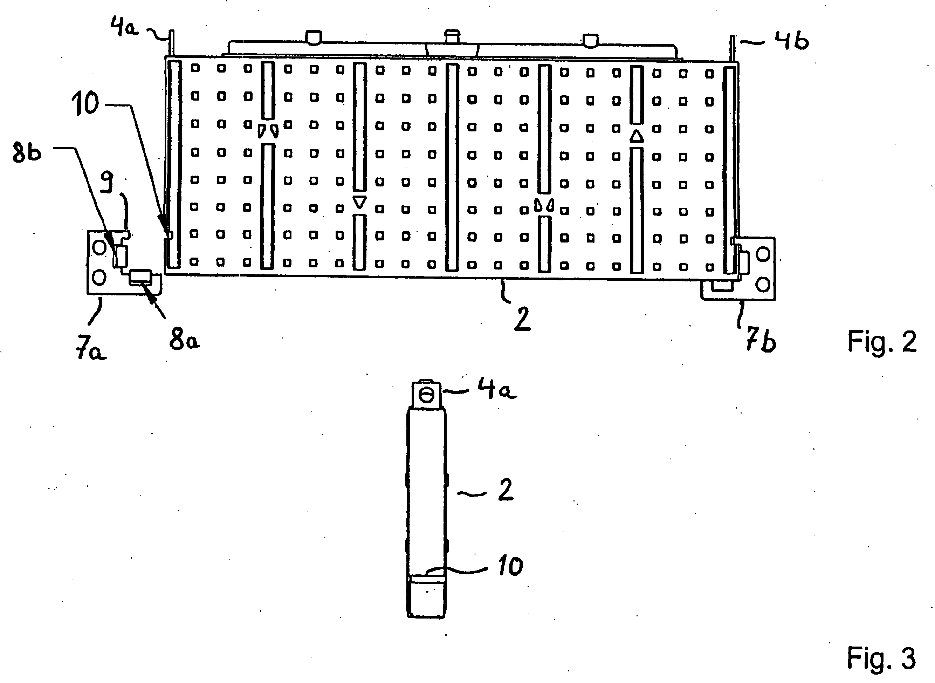

Die Figur 2 lässt eine Seitenansicht auf ein Zellenverbundmoduls 2 und die linken und rechten Befestigungsschienen 7a, 7b erkennen. Die linke Befestigungsschiene 7a ist hierbei in Explosionsansicht und die rechte Befestigungsschiene 7b im montierten Zustand dargestellt. Es ist erkennbar, dass eine vom seitlichen Schenkel der Befestigungsschienen in Richtung Zellenverbundmodul 2 vorspringende Feder 9 in eine an der Schmalseite des Gehäuses des Zellenverbundmoduls 2 eingebrachte entsprechende Nut 10 eingreift. Damit wird eine Festlagerung der Zellenverbundmoduls 2 an der Befestigungsschiene 7 erreicht, die dennoch einen gewissen Freiheitsgrad an Bewegung in Längsrichtung des Zellenverbundmoduls 2, d.h. in Richtung der längsten Seite des Zellenverbundmoduls 2 zulässt.

Weiterhin ist erkennbar, dass die Schenkel der Befestigungsschiene 7a, 7b Nuten haben, in die streifenförmige Feder-Dämpfungs-Elemente 8a, 8b eingelegt sind. Diese Feder-Dämpfungs-Elemente 8a, 8b stehen von der Oberfläche der Schenkel hervor, um die Zellen 2 zu tragen. Das Feder-Dämpfer-Element kann beispielsweise eine technische Feder sein, die aus einem hochelastischen Elastomer gebildet ist. Durch das Anlegen der Feder-Därnpfungs-Elemente in Streifen in die Befestigungsschienen 7a, 7b wird eine Einspannung der Zellenverbundmodule 2 in verschiedene Achsrichtungen ermöglicht. Prinzipiell ist eine Einlage in alle Achsrichtungen möglich. Zellenverbundmodule 2, die eine Wegstrecke aufgrund von Vibrationen, Schwingungen, Stößen, Schlägen oder Längenänderungen aufgrund Temperatureinfluss zurücklegen wollen, müssen dafür eine Kraft aufbringen. Die aufzubringende Gegenkraft kann mittels der Federkennlinie des verwendeten Materials für die Feder-Dämpfungs-Elemente festgelegt werden. Der Kraftanstieg ist dem zurückgelegten Weg proportional.

Die Figur 3 lässt eine Ansicht auf die Schmalseite eines Zellenverbundmoduls 2 erkennen. Deutlich sichtbar ist die sich quer von einer Seitenwand zur anderen über die Schmalseite erstreckende Nut, die zum Eingriff der Feder 9 einer zugeordneten Befestigungsschiene 7 vorgesehen ist.

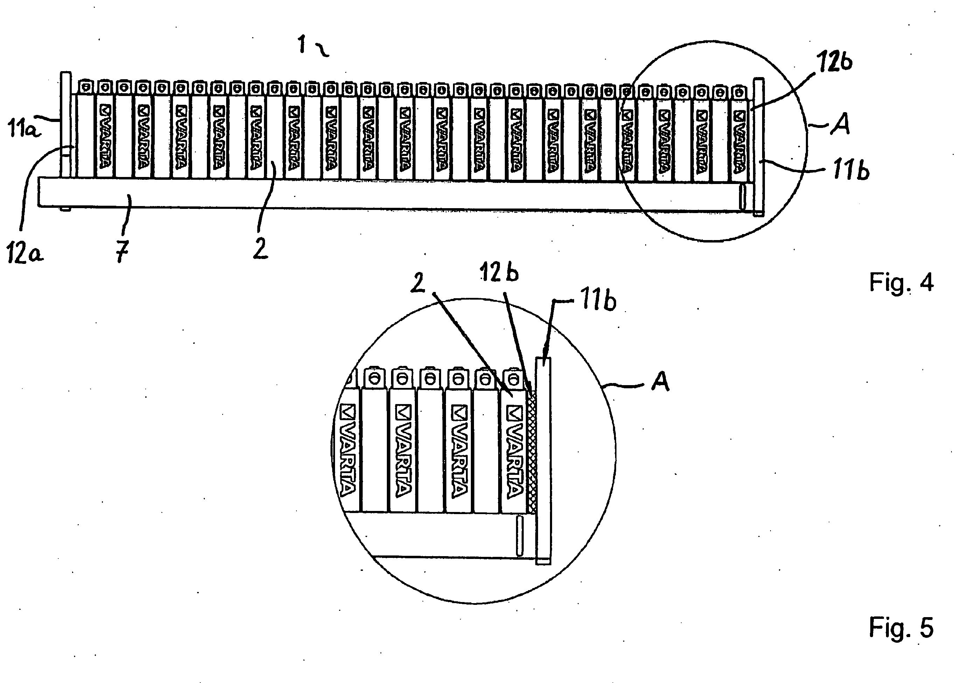

Die Figur 4 lässt eine Seitenansicht der elektrischen Speicherbatterie 1 mit einer Vielzahl aneinander gereihten Zellenverbundmodule 2 erkennen. Dabei wird deutlich, dass an die linken und rechten Seitenwände 11a, 11 b jeweils eines weiteres Feder-Dämpfungs-Element 12a, 12b angrenzt, das auf der anderen Seite im wesentlichen an der ganzen Fläche der Seitenwand der angrenzenden äußeren Zellenverbundmodule 2 anschließt. Auf diese Weise wird auch eine Dämpfung von Vibrationen und Stößen aufgefangen, die von der Seitenwand 11a, 11 b in den Verbund von Zellenverbundmodulen 2 eingetragen werden.

Die Figur 5 lässt einen Ausschnitt a der Seitenansicht aus Figur 4 erkennen. Die Detailansicht zeigt nochmals deutlicher das zwischen der äußeren Zellenverbundmodule 2 und der rechten Seitenwand 11 b eingelegte Feder-Dämpfungs-Element 12b.

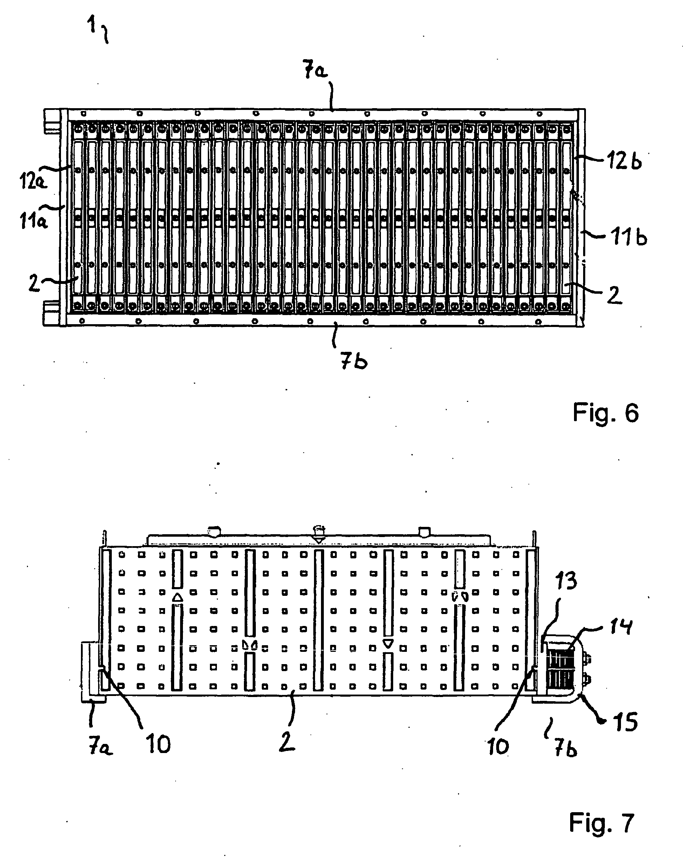

Die Figur 6 lässt eine Draufsicht auf die elektrische Speicherbatterie 1 erkennen. Wiederum wird deutlich, dass die Befestigungsschienen 7a, 7b die aneinander gereihten rechteckförmigen Zellenverbundmodule an der Unterseite und den Seiten tragen. Weiterhin sind die Feder-Dämpfungs-Elemente 12a, 12b zwischen den Seitenwänden 11a, 11b des Gehäuses und den äußeren Zellenverbundmodulen 2 erkennbar.

Die Figur 7 zeigt eine Seitenansicht eines Zellenverbundmoduls 2 mit quer verlaufender Nut 10 in Verbindung mit einer weiteren Ausführungsform von Befestigungsschienen 7a, 7b zur Los- und Festlagerung eines Verbunds aneinander gereihter Zellenverbundmodule 2. Die als Festlager vorgesehene Befestigungsschiene 7a hat einen Vorsprung, der in die Nuten 10 der Zellenverbundmodule 2 eingreift. Auf der gegenüberliegenden Seite der Zellenverbundmodule 2 hat die zur Loslagerung vorgesehene Befestigungsschiene 7b ebenfalls eine Schiene 13 mit in die Nuten 10 der Zellenverbundmodule 2 eingreifendem Vorsprung. Die Schiene 13 ist über ein Feder-Dämpfungs-Element 14 mit einer Montageschiene 15 so verbunden, dass eine Ausdehnung der Zellnverbundmodule 2 in Längsrichtung, d.h. in Richtung der Festlager-Befestigungsschiene 7a zur Loslager-Befestigungsschiene 7b möglich ist und über das Feder-Dämpfungs-Element 14 ausgeglichen werden kann.

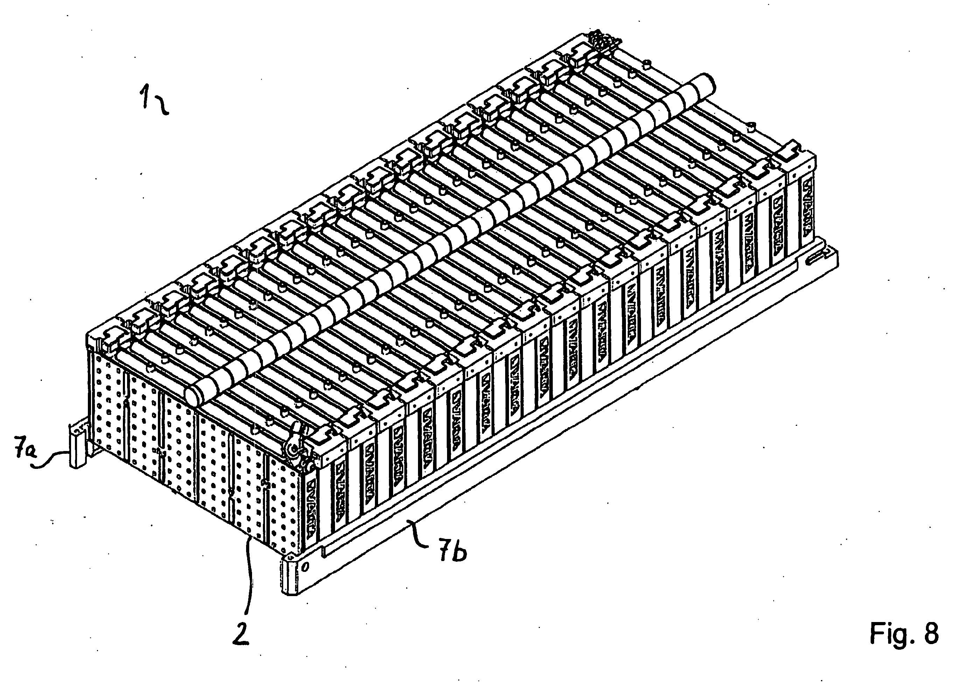

Die Figur 8 zeigt eine perspektivische Ansicht einer elektrischen Speicherbatterie 1 mit einer Vielzahl von in den Befestigungsschienen 7a, 7b getragenen Zellenverbundmodule 2.

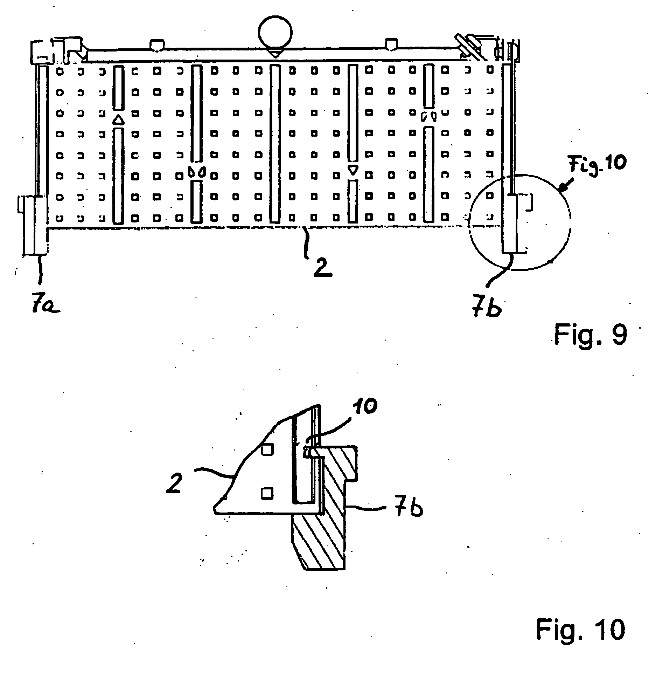

Die Figur 9 lässt eine Seitenansicht eines Zellenverbundmoduls 2 mit einer weiteren Ausführungsform von Befestigungsschienen 7a, 7b zur Los- und Festlagerung des Zellenverbundmoduls 2 erkennen.

Figur 10 lässt eine Ausschnittsansicht eines Querschnitts der Loslager-Befestigungsschiene 7b erkennen. Es wird deutlich, dass die Loslager-Befestigungsschiene 7b mit einem Vorsprung (Feder) in die Nut 10 des Zellenverbundmoduls 2 eingreift, wobei ein Spalt zwischen Zellenverbundmodul 2 und Befestigungsschiene 7b vorgesehen ist, um eine Ausdehnung des Zellenverbundmoduls 2 zu ermöglichen. Durch die Nut-Feder-Verbindung wird dennoch sichergestellt, dass die Zellenverbundmodule 2 quer zur Längsrichtung fest getragen und in Längsrichtung geführt werden.

Die als Loslager wirkende Befestigungsschiene 7b kann optional auch aus einem Feder-Dämpfungs-Material gebildet sein.

## Patentansprüche

1. Elektrische Speicherbatterie (1) mit einem Gehäuse und einer Mehrzahl von elektrisch miteinander verschalteten, rechteckigen Zellenverbundmodulen (2), wobei die rechteckigen Zellenverbundmodule (2) mit Feder-Dämpfungs-Elementen (8,12) im Gehäuse gelagert werden, die jeweils im Zwischenraum zwischen dem äußeren Bereich mindestens einer Unterkante der Zellenverbundmodule (2) und dem Gehäuse angeordnet sind, **dadurch gekennzeichnet, dass** sich mindestens ein gemeinsames Feder-Dämpfungs-Element (8) quer zur Richtung der längsten Seite der Zellenverbundmodule (2) entlang der Mehrzahl der Zellenverbundmodule (2) erstreckt und mit jeweils einer im Profil L-förmigen Befestigungsschiene (7a, 7b), die mit zwei an zugeordneten Seitenkanten senkrecht aufeinander stehenden Schenkeln an die Übergänge der Unterkante zur Seitenkante der Zellenverbundmodule (2) angrenzt, die sich quer zur Richtung der längsten Seite der Zellenverbundmodule (2) entlang der Mehrzahl der Zellenverbundmodule (2) erstreckt, wobei die unteren Schenkel der Befestlgungsschienen (7a, 7b) an die Unterkante der Zellenverbundmodule (2) angrenzen, während die seitlichen Schenkel benachbart zu den Seitenkanten der Zellenverbundmodule (2) sind.

2. Elektrische Speicherbatterie (1) nach Anspruch 1, **dadurch gekennzeichnet, dass** mindestens zwei Feder-Dämpfungs-Elemente (8) im äußeren Bereich der Unterkanten der Zellenverbundmodule (2) angeordnet sind.

3. Elektrische Speicherbatterie (1) nach einem der vorhergehenden Ansprüche, **dadurch gekennzeichnet, dass** an beiden Seitenkanten der Zellenverbundmodule (2) jeweils mindestens ein Feder-Dämpfungs-Element (12) angeordnet ist.

4. Elektrische Spolcherbatterie (1) nach einem der vorhergehenden Ansprüche, **dadurch gekennzeichnet, dass** mindestens eine der Befestigungsschienen (7a, 7b) Nuten zur Aufnahme der Feder-Dämpfungs-Elemerite (8a, 8b) hat.

5. Elektrische Speicherbatterie (1) nach einem der Ansprüche 1 bis 3, **dadurch gekennzeichnet, dass** mindestens eine der Befestigungsschienen (7a, 7b) aus einem federnden und dämpfenden Material gebildet ist und als Feder-Dämpfungs-Elemente (8) wirkt.

6. Elektrische Speicherbatterie (1) nach einem der Ansprüche 1 bis 3, **dadurch gekennzeichnet, dass** mindestens eine der Befestigungsschienen (7a, 7b) über ein Federpaket mit dem Gehäuse verschraubt ist.

7. Elektrische Speicherbatterie (1) nach einem der vorgehenden Ansprüche, **gekennzeichnet durch** Feder-Dämpfungs-Elemante (12) angrenzend an die Seitenwände des Gehäuses und die Seitenwände der äußeren Zellenverbundmoduie (2).

8. Elektrische Speicherbatterie (1) nach einem der vorhergehenden Ansprüche, **dadurch gekennzeichnet, dass** die Feder-Dämpfungs-Elemente (8, 12) aus Elastomermaterial gebildet sind.

9. Elektrische Speicherbatterie (1) nach einem der vorhergehenden Ansprüche, **dadurch gekennzeichnet, dass** die Zellenverbundmodule (2) weiterhin über Festlager mit dem Gehäuse verbunden sind.

10. Elektrische Speicherbatterie (1) nach Anspruch 9, **dadurch gekennzeichnet, dass** Festlager als Nut-Feder-Verbindung zwischen Zellenverbundmodul (2) und Gehäuse oder im Gehäuse fest verbundenen Befestigungselement (7) ausgebildet ist.

## Claims

1. Electrical storage battery (1) having a housing and a plurality of rectangular cell assembly modules (2) which are electrically connected to one another, wherein the rectangular cell assembly modules (2) are mounted by means of spring damping elements (8, 12) in the housing and are in each case arranged in the intermediate space between the outer area of at least one lower edge of the cell assembly modules (2) and the housing, **characterized in that** at least one common spring damping element (8) extend transversely with respect to the direction of the longest side of the cell assembly modules (2) along the plurality of cell assembly modules (2) and with in each case one mounting rail (7a, 7b) which has an L-shaped profile and two limbs, which are at right angles to one another on associated side edges, adjacent to the transitions between the lower edge and the side edge of the cell assembly modules (2), which mounting rail (7a, 7b) extends transversely with respect to the direction of the longest side of the cell assembly modules (2) along the plurality of cell assembly modules (2), wherein the lower limbs of the mounting rails (7a, 7b) are adjacent to the lower edge of the cell assembly modules (2), while the side limbs are adjacent to the side edges of the cell assembly modules (2).

2. Electrical storage battery (1) according to claim 1, **characterized in that** at least two spring damping elements (8) are arranged in the outer area of the lower edges of the cell assembly modules (2).

3. Electrical storage battery (1) according to one of the preceding claims, **characterized in that** at least one spring damping element (12) is in each case arranged on both side edges of the cell assembly modules (2).

4. Electrical storage battery (1) according to one of the preceding claims, **characterized in that** at least one of the mounting rails (7a, 7b) having grooves to hold the spring damping elements (8a, 8b).

5. Electrical storage battery (1) according to one of claims 1 to 3, **characterized in that** at least one of the mounting rails (7a, 7b) being formed from a sprung and damping material and acting as a spring damping element (8).

6. Electrical storage battery (1) according to one of claims 1 to 3, **characterized in that** at least one of the mounting rails (7a, 7b) being screwed to the housing via a spring pack.

7. Electrical storage battery (1) according to one of the preceding claims, **characterized by** spring damping elements (12) adjacent to the side walls of the housing and the side walls of the outer cell assembly modules (2).

8. Electrical storage battery (1) according to one of the preceding claims, **characterized in that** the spring damping elements (8, 12) are formed from elastomer material.

9. Electrical storage battery (1) according to one of the preceding claims, **characterized in that** the cell assembly modules (2) are also connected to the housing via a fixed bearings.

10. Electrical storage battery (1) according to Claim 9, **characterized in that** the fixed bearing is in the form of a tongue and groove connection between the cell assembly module (2) and the housing or a mounting element (7) which is firmly connected in the housing.

## Revendications

1. Accumulateur électrique (1) comprenant un boîtier et une pluralité de modules composites de cellule (2) rectangulaires connectés électriquement entre eux, les modules composites de cellule (2) rectangulaires étant logés dans le boîtier avec des éléments amortisseurs à ressort (8, 12) qui sont respectivement disposés dans l'espace intermédiaire entre la zone extérieure d'au moins un bord inférieur des modules composites de cellule (2) et le boîtier, **caractérisé en ce qu'**au moins un élément amortisseur à ressort (8) commun s'étend transversalement à la direction du côté le plus long des modules composites de cellule (2) le long de la pluralité de modules composites de cellule (2) et un rail de fixation (7a, 7b) au profilé en forme de L, lequel est limitrophe des transitions entre le bord inférieur et le bord latéral des modules composites de cellule (2) avec deux branches perpendiculaires l'une de l'autre au niveau des arêtes latérales associées, qui s'étend à chaque fois transversalement à la direction du côté le plus long des modules composites de cellule (2) le long de la pluralité de modules composites de cellule (2), les branches inférieures des rails de fixation (7a, 7b) étant limitrophes du bord inférieur des modules composites de cellule (2) alors que les branches latérales étant voisines des bords latéraux des modules composites de cellule (2).

2. Accumulateur électrique (1) selon la revendication 1, **caractérisé en ce qu'**au moins deux éléments amortisseurs à ressort (8) sont disposés dans la zone extérieure des bords inférieurs des modules composites de cellule (2).

3. Accumulateur électrique (1) selon l'une des revendications précédentes, **caractérisé en ce qu'**au moins un élément amortisseur à ressort (12) est à chaque fois disposé sur les deux côtés latéraux des modules composites de cellule (2).

4. Accumulateur électrique (1) selon l'une des revendications précédentes, **caractérisé en ce qu'**au moins l'un des rails de fixation (7a, 7b) possède des rainures pour accueillir les éléments amortisseurs à ressort (8a, 8b).

5. Accumulateur électrique (1) selon l'une des revendications 1 à 3, **caractérisé en ce qu'**au moins l'un des rails de fixation (7a, 7b) est constitué d'un matériau élastique et amortisseur et fait office d'élément amortisseur à ressort (8).

6. Accumulateur électrique (1) selon l'une des revendications 1 à 3, **caractérisé en ce qu'**au moins l'un des rails de fixation (7a, 7b) est fixé avec des vis au boîtier par le biais d'un bloc ressort.

7. Accumulateur électrique (1) selon l'une des revendications précédentes, **caractérisé par** des éléments amortisseurs à ressort (12) limitrophes des parois latérales du boîtier et des parois latérales des modules composites de cellule (2) extérieurs.

8. Accumulateur électrique (1) selon l'une des revendications précédentes, **caractérisé en ce que** les éléments amortisseurs à ressort (8, 12) sont constitués d'un matériau élastomère.

9. Accumulateur électrique (1) selon l'une des revendications précédentes, **caractérisé en ce que** les modules composites de cellule (2) sont en plus reliés avec le boîtier par le biais de paliers fixes.

10. Accumulateur électrique (1) selon la revendication 9, **caractérisé en ce que** les paliers fixes sont réalisées sous la forme d'une liaison à rainure et languette entre le module composite de cellule (2) et le boîtier ou l'élément de fixation (7) fixé à demeure dans le boîtier.
